# EUROPEAN PATENT APPLICATION

(11) **EP 4 020 366 A1**
(43) Date of publication of application: **29.06.2022**
(21) Application number: 19941865.8
(22) Date of filing: 16.10.2019
(51) Int. Cl.: G06Q 50/10, G06Q 50/22, G06Q 30/02, G06Q 20/00

(54) **SYSTEM FOR PROCESSING AND PROVIDING CUSTOMIZED INFORMATION ON BASIS OF QUESTIONNAIRE DATA, AND METHOD THEREFOR**

(30) Priority: 20.08.2019 KR 20190101546
(71) Applicant: Clinomics Inc., Ulsan 44919 (KR)
(72) Inventor: CHO, Yun Sung, Yongin-si Gyeonggi-do 16953 (KR); BHAK, Jong Hwa, Ulju-gun Ulsan 44936 (KR); CHO, Su An, Hwaseong-si Gyeonggi-do 18320 (KR)
(74) Representative: Frenkel, Matthias Alexander
(86) International application number: PCT/KR2019/013602
(87) International publication number: WO 2021/033834

(57) **Abstract**

Disclosed in the present invention are a system for processing and providing customized information based on questionnaire data, and a method therefor. That is, the present invention constructs big data related to a specific individual on the basis of questionnaire data for a plurality of tests, and provides comparison information that compares the constructed big data related to a specific individual with big data of other users related to the corresponding specific individual, thereby providing information on a relationship between a corresponding individual and acquaintances and inducing interest among users.

## Description

### TECHNICAL FIELD

The present invention relates to a system and method for processing and providing customized information based on questionnaire data, and in particular, a system and method for processing customized information based on questionnaire data, which establishes bigdata related to a specific individual based on questionnaire data for a plurality of tests and provides comparison information obtained by comparing the established bigdata, related to the specific individual, with bigdata of another user related to the specific individual.

### BACKGROUND ART

A personality or aptitude test system is a system that tests a person's character, aptitude, and personality and provides the results of the test to the individual in various ways.

This character, aptitude, and personality test system performs a preset character test, aptitude test, and personality test on a specific individual and only provides results according to the character test, personality test, etc. That is, such system provides only fragmentary information about the character and personality related to a specific individual.

Further, this character, aptitude, and personality test system fails to provide integrated or varied information through combination of various tests, profiling of test results of each individual, application of an intelligent algorithm, and high-level information analysis.

### DETAILED DESCRIPTION OF THE INVENTION

### TECHNICAL PROBLEMS

The present invention aims to provide a system and method for processing customized information based on questionnaire data, which establishes bigdata related to a specific individual based on questionnaire data for multiple various types of tests and provides comparison information obtained by comparing the established bigdata, related to the specific individual, with bigdata of another user related to the specific individual.

Another object of the present invention is to provide a system and method for processing and providing ultimate customized information based on questionnaire data, which builds bigdata related to a specific individual based on questionnaire data for a plurality of tests and provides additional functions by fusing various types of information, including four-pillars-of-destiny information including the year, month, day, and time of birth, compatibility information, genotype information (including, e.g., acquired genotype and gene expression information), health information/health diagnosis information (e.g., results of depression, distribution, suicide prediction tests, and exercise/food information according to health information), and person recommendation information, which are precise human data related to the specific individual, based on the built bigdata related to the specific individual.

Another object of the present invention is to provide a system and method for processing customized information based on questionnaire data, which establishes bigdata related to a specific individual based on questionnaire data for a plurality of tests and performs profiling per individual based on the built bigdata related to the specific individual.

### MEANS TO ADDRESS THE PROBLEMS

According to an embodiment of the present invention, a system for processing and providing customized information based on questionnaire data may comprise a terminal, when information about any one test is selected from among information about one or more tests included in a test screen displayed on the terminal according to a user's selection, performing a test function for a test corresponding to the information about the selected any one test in conjunction with a server and displaying a test function execution result provided from the server and the server matching the test function execution result with user information related to the user, creating a database for the matched test function execution result and user information, performing machine learning on a database of one or more test function execution results corresponding to one or more tests performed on the terminal, calculating interaction scores per test item according to one or more test function execution results corresponding to one or more tests performed on the terminal based on an evaluation score preset for each test item according to a test type and a result of the machine learning, calculating an average interaction score by dividing a sum of the calculated interaction scores by the number of the tests performed on the terminal, and transmitting the calculated interaction scores and average interaction score to the terminal.

As an example related to the present invention, the server may identify a test item having a high interaction score among the calculated per-test item interaction scores, compare an interaction score corresponding to the identified test item having the high interaction score, among interaction scores for a plurality of test items corresponding to a plurality of other users related to the user of the terminal, with the interaction score having the high interaction score related to the terminal, generate comparison information corresponding to a result of comparison between interaction scores corresponding to the plurality of other users and the interaction score related to the terminal in relation to the test item having the high interaction score, and transmit the generated comparison information to the terminal.

As an example related to the present invention, when any one function is selected from among a plurality of functions included in an additional function screen displayed on the terminal according to the user's selection, the terminal may apply the test function execution result and perform the selected any one function in conjunction with the server. The plurality of functions may include any one of a four-pillars-of-destiny information comparison function, a genotype information comparison function, an information sharing function, a friend recommendation function, a test recommendation function according to user input data, a test recommendation function based on accumulated questionnaire data or the calculated interaction scores, an accumulated questionnaire data sale function, a function of adding a comment to the accumulated questionnaire data, a job search/recruitment function based on the accumulated questionnaire data or the calculated interaction scores, an additional test function for a specialized technical field, a future planning or job recommendation function, and an individual customized health information recommendation function.

As an example related to the present invention, when the four-pillars-of-destiny information comparison function is selected from among a plurality of functions displayed on a side of the terminal according to the user's selection, the server may identify four-pillars-of-destiny information related to the user of the terminal using information including a year, month, day, and time of birth related to the terminal, pre-registered in the server, based on information about the four-pillars-of-destiny information comparison function transmitted from the terminal, compare a test function execution result related to a social test, an emotional test, and a practical test among test function execution results accumulated in relation to the terminal, with the identified four-pillars-of-destiny information, generate a result of comparison between a test result for each individual and innate four-pillars-of-destiny information, and transmit the generated result of the comparison between the test function execution result and the four-pillars-of-destiny information to the terminal. The terminal may display the result of the comparison between the test function execution result and the four-pillars-of-destiny information transmitted from the server.

As an example related to the present invention, when the genotype information comparison function is selected from among a plurality of functions displayed on a side of the terminal according to the user's selection, the server may identify a DNA analysis result and medical treatment information related to the user of the terminal in conjunction with a hospital server based on information about the genotype information comparison function transmitted from the terminal, combine a test function execution result related to health among accumulated test function execution results in relation to the terminal and the identified DNA analysis result and medical treatment information related to the user of the terminal, generate information about the user's innate personality or propensity, and transmit the generated information about the user's innate personality or propensity to the terminal. The terminal may display the information about the user's innate personality or propensity transmitted from the server.

As an example related to the present invention, when the information sharing function is selected from among a plurality of functions displayed on a side of the terminal according to the user's selection, the server may register one or more test function execution results to be shared, to a web portal cluster or social media service account related to the user based on information about the information sharing function transmitted from the terminal and information about the one or more test function execution results to be shared.

As an example related to the present invention, when the accumulated questionnaire data sale function is selected from among a plurality of functions displayed on a side of the terminal according to the user's selection, the server may provide, to a purchaser terminal, at least one test function execution result related to at least one test performed on the terminal, based on information about the accumulated questionnaire data sale function transmitted from the terminal and information about the at least one test performed on the terminal, to be sold, and provide cryptocurrency according to the sold test function execution result to a cryptocurrency account related to the user of the terminal as the at least one test function execution result is provided.

According to an embodiment of the present invention, a method for processing and providing customized information based on questionnaire data may comprise, when information about any one test is selected from among information about one or more tests included in a test screen displayed on a terminal according to a user's selection, performing, by the terminal, a test function for a test corresponding to the information about the selected any one test in conjunction with a server, matching, by the server, a test function execution result according to performing the test function with the terminal, with user information related to the user, creating a database for the matched test function execution result and user information, and providing the test function execution result to the terminal, calculating, by the server, interaction scores per test item according to one or more test function execution results corresponding to one or more tests performed on the terminal based on an evaluation score preset for each test item according to a test type, calculating, by the server, an average interaction score by dividing a sum of the calculated interaction scores by the number of the tests performed on the terminal, transmitting, by the server, the calculated interaction scores and average interaction score to the terminal, and displaying, by the terminal, the interaction scores and the average interaction score transmitted from the server.

As an example related to the present invention, the method may further comprise identifying, by the server, a test item having a high interaction score among the calculated per-test item interaction scores, comparing, by the server, an interaction score corresponding to the identified test item having the high interaction score, among interaction scores for a plurality of test items corresponding to a plurality of other users related to the user of the terminal, with the interaction score having the high interaction score related to the terminal, generating, by the server, comparison information corresponding to a result of comparison between interaction scores corresponding to the plurality of other users and the interaction score related to the terminal in relation to the test item having the high interaction score, transmitting, by the server, the generated comparison information to the terminal, and displaying, by the terminal, the comparison information transmitted from the server.

As an example related to the present invention, the method may further comprise, when any one function is selected from among a plurality of functions included in an additional function screen displayed on the terminal according to the user's selection, applying, by the terminal, the test function execution result and performing the selected any one function in conjunction with the server. The plurality of functions may include any one of a four-pillars-of-destiny information comparison function, a genotype information comparison function, an information sharing function, a friend recommendation function, a test recommendation function according to user input data, a test recommendation function based on accumulated questionnaire data or the calculated interaction scores, an accumulated questionnaire data sale function, a function of adding a comment to the accumulated questionnaire data, a job search/recruitment function based on the accumulated questionnaire data or the calculated interaction scores, an additional test function for a specialized technical field, and a future planning or job recommendation function.

### EFFECTS OF THE INVENTION

According to the present invention, it is possible to establish bigdata related to a specific individual based on questionnaire data for a plurality of tests and provide comparison information obtained by comparing the established bigdata, related to the specific individual, with bigdata of another user related to the specific individual. Thus, it is possible to provide information about the relationship between the individual and his acquaintances and hence arouse interest.

Further, according to the present invention, it is possible to build bigdata related to a specific individual based on questionnaire data for a plurality of tests and provide additional functions according to information fusion with four-pillars-of-destiny information, genotype information, and person recommendation information related to the specific individual, based on the built bigdata related to the specific individual. Thus, it is possible to provide various types of additional information related to the individual and hence allow for better satisfaction and easier creation of high-quality content.

Further, according to the present invention, it is possible to build big data related to a specific individual based on questionnaire data for a plurality of tests and perform profiling for each individual, based on the built bigdata related to the specific individual. Thus, it is possible to recommend health solutions including health functional foods, cosmetics, customized supplements or drugs, exercise information, lifestyle information, etc. optimized for the individual.

### BRIEF DESCRIPTION OF THE DRAWINGS

FIG. 1 is a block diagram illustrating a configuration of a system for processing and providing customized information based on questionnaire data according to an embodiment of the present invention.
FIG. 2 is a block diagram illustrating a configuration of a terminal according to an embodiment of the present invention.
FIG. 3 is a flowchart illustrating a method for processing and providing customized information based on questionnaire data according to an embodiment of the present invention.
FIGS. 4 to 7 are views illustrating example screens of a terminal according to an embodiment of the present invention.

### BEST MODE TO PRACTICE THE INVENTION

The terms as used herein are provided merely to describe some embodiments thereof, but not to limit the present disclosure. The terms as used herein are provided merely to describe some embodiments thereof, but not to limit the scope of other embodiments of the present disclosure. Unless otherwise defined, all terms including technical and scientific terms used herein have the same meaning as commonly understood by one of ordinary skill in the art to which the embodiments of the present invention pertain and should not be interpreted as overly broad or narrow. As used herein, terms wrong or inappropriate for representing the spirit of the present invention may be replaced with and understood as more proper ones to represent the spirit of the present invention by one of ordinary skill in the art. General terms as used herein should be interpreted in the context of the specification or as defined in dictionaries.

As used herein, the singular forms "a," "an," and "the" are intended to include the plural forms as well, unless the context clearly indicates otherwise. As used herein, the term "comprise," "include," or "have" should be appreciated not to preclude the presence or addability of features, numbers, steps, operations, components, parts, or combinations thereof as set forth herein.

The terms coming with ordinal numbers such as 'first' and 'second' may be used to denote various components, but the components are not limited by the terms. The terms are used only to distinguish one component from another. For example, a first component may be denoted a second component, and vice versa without departing from the scope of the present disclosure.

Hereinafter, exemplary embodiments of the inventive concept will be described in detail with reference to the accompanying drawings. The same reference denotations may be used to refer to the same or substantially the same elements throughout the specification and the drawings. No duplicate description of the same elements is given herein.

When determined to make the subject matter of the present invention unclear, the detailed description of the known art or functions may be skipped. The accompanying drawings are provided for an easier understanding of the spirit of the reception but the present invention should not be limited thereby.

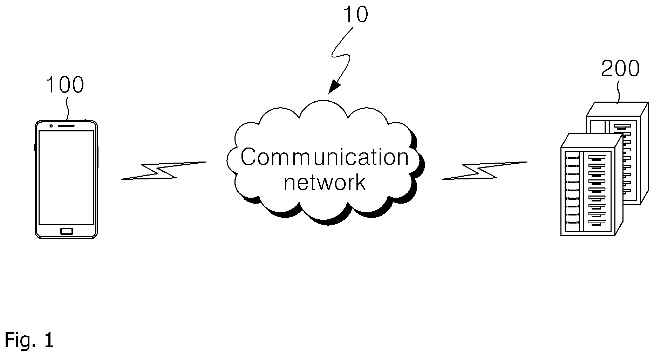

FIG. 1 is a block diagram illustrating a configuration of a system 10 for processing and providing customized information based on questionnaire data according to an embodiment of the present invention.

As shown in FIG. 1, the system 10 for processing and providing customized information based on questionnaire data include a terminal 100 and a server 200. All of the components of the customized information providing system 10 shown in FIG. 1 are not essential components, and the customized information providing system 10 may be implemented with more or less components than those shown in FIG. 1.

The terminal 100 may be applicable to various terminals or devices, such as smartphones, portable terminals, mobile terminals, foldable terminals, personal digital assistants (PDAs), portable multimedia players (PMPs), telematics terminals, navigation terminals, personal computers, laptop computers, slate PCs, tablet PCs, ultrabook computers, wearable devices, such as smartwatches, smart glasses, head-mounted displays, etc., Wibro terminals, Internet protocol television (IPTV) terminals, smart TVs, digital broadcast terminals, audio video navigation (AVN) terminals, audio/video (A/V) systems, flexible terminals, or digital signage devices.

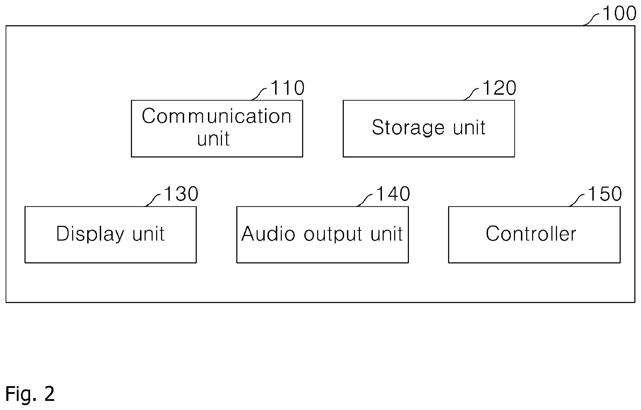

As shown in FIG. 2, the terminal 100 includes a communication unit 110, a storage unit 120, a display unit 130, an audio output unit 140, and a controller 150. All of the components of the terminal 100 shown in FIG. 2 are not essential components, and the terminal 100 may be implemented with more or less components than those shown in FIG. 2.

The communication unit 110 forms a communication connection with any internal component or at least one external terminal via a wired/wireless communication network. The external terminal may include the server 200. Wireless Internet technology which may be adopted for transmission over the wireless communication network may include at least one of wireless LAN (WLAN), digital living network alliance (DLNA), wireless broadband (Wibro), world interoperability for microwave access (Wimax), high speed downlink packet access (HSDPA), high speed uplink packet access (HSUPA), IEEE 802.16, long-term evolution (LTE), LTE-advanced (LTE-A), LTE V2X (C'V2X), wireless mobile broadband service (WMBS), or 5G communication. The communication unit 110 may transmit or receive data according to at least one wireless Internet technology which may include not only the above-enumerated techniques but also other non-mentioned Internet techniques. Short-range communication techniques that may be adopted according to an embodiment may include Bluetooth, radio frequency identification (RFID), infrared data association (IrDA), ultra-wideband (UWB), ZigBee, near-field communication (NFC), ultrasound communication (USC), visible light communication (VLC), Wi-Fi, or Wi-Fi direct. Wired communication techniques that may be adopted according to an embodiment may include power line communication (PLC), universal serial bus (USB) communication, Ethernet, serial communication, or optical/coaxial cable communication.

The communication unit 110 may communicate information or data with any terminal via a USB.

The communication unit 110 transmits or receives wireless signals to/from at least one of a base station or the server 200 over a mobile communication network established as per mobile communication standards, protocols, or schemes, such as global system for mobile communication (GSM), code division multiple access (CDMA), CDMA2000, enhanced voice-data optimized or enhanced voice-data only (EV-DO), wideband CDMA (WCDMA), high speed downlink packet access (HSDPA), high speed uplink packet access (HSUPA), long term evolution (LTE), or LTE-advanced (LTE-A).

Further, the communication unit 110 receives test information for performing various test functions, transmitted from the server 200 under the control of the controller 150.

The storage unit 120 stores various user interfaces (Uls) and graphic user interfaces (GUIs).

Further, the storage unit 120 stores data and programs necessary for the terminal 100 to operate.

In other words, the storage unit 120 may store a plurality of application programs or applications driven on the terminal 100 and data and commands for operation of the terminal 100. At least some of the application programs may be downloaded from an external server via wireless communication. Further, the terminal 100 may come equipped with at least some of the application programs at the time of shipment. Meanwhile, the application program may be stored in the storage unit 120, installed on the terminal 100, and driven by the controller 150 to perform operations (or functions) of the terminal 100.

The storage unit 120 may include at least one type of storage medium of flash memory types, hard disk types, multimedia card micro types, card types of memories (e.g., SD or XD memory cards), RAMs (Random Access Memories), SRAMs (Static Random Access Memories), ROMs (Read-Only Memories), EEPROMs (Electrically Erasable Programmable Read-Only Memories), PROMs (Programmable Read-Only Memories), magnetic memories, magnetic disks, or optical discs. The terminal 100 may operate web storage which performs the storage function of the storage unit 120 over the Internet or may operate in association with the web storage.

Further, the storage unit 120 stores test information for performing various test functions, transmitted from the server 200 under the control of the controller 150.

The display unit 130 may display various contents, e.g., various menu screens, using the UI and/or GUI stored in the storage unit 120 under the control of the controller 150. The contents displayed on the display unit 130 include a menu screen including various pieces of text or image data (including various information data), icons, a list menu, combo boxes, or other various pieces of data. The display unit 130 may be a touchscreen.

The display unit 130 may include at least one of a liquid crystal display (LCD), a thin film transistor-liquid crystal display (TFT-LCD), an organic light-emitting diode (OLED), a flexible display, or a three-dimensional (3D) display, an e-ink display, or a light emitting diode (LED) display.

Further, the display unit 130 displays test information for performing various test functions, transmitted from the server 200 under the control of the controller 150.

The audio output unit 140 outputs audio information included in a signal signal-processed by the controller 150. The audio output unit 140 may include, e.g., a receiver, a speaker, and a buzzer.

The audio output unit 140 outputs a guidance (or instruction) audio generated by the controller 150.

Further, the audio output unit 140 outputs audio information (or audio effects) corresponding to test information for performing various test functions, transmitted from the server 200 under the control of the controller 150.

The controller (or microcontroller unit (MCU)) 150 executes an overall control function of the terminal 100.

Further, the controller 150 executes an overall control function of the terminal 100 using programs and data stored in the storage unit 120. The controller 150 may include a RAM, a ROM, a central processing unit (CPU), a graphics processing unit (GPU), and a bus, and the RAM, ROM, CPU, and GPU may be interconnected via the bus. The CPU may access the storage unit 120 and boot the operating system (OS) stored in the storage unit 120. The CPU may perform various operations using various programs, contents, and data stored in the storage unit 120.

Further, the controller 150 interworks with the server 200 to sign up as a regular user member to perform various test functions and register personal information through a dedicated app and/or website provided by the server 200. In this case, the personal information may include an ID, email address, password, name, gender, date of birth, contact information, and the like.

Further, the controller 150 may sign up, as a user, to the server 200 according to information about a social media account of the user of the terminal 100. Here, the social media account may be information related to Facebook, Twitter, Kakao Story, or the like.

Further, when performing the signup process, the controller 150 needs to complete an authentication function through an authentication means (including, e.g., a mobile phone, credit card, or i-Pin) to normally complete the signup process for the server 200.

Further, after signup is complete, the controller 150 installs a dedicated app (or application/application program/specific app) provided from the server 200 on the terminal 100 so as to use the service provided from the server 200. In this case, the dedicated app may be a dedicated app for performing various test functions.

Further, the controller 150 executes a dedicated app previously installed on the terminal 100 and displays an app execution result screen according to the execution of the dedicated app, on the display unit 130. Here, the app execution result screen includes a test menu (or buttons/items) for performing various types of tests provided from the server 200, an additional function menu for performing various additional functions (or providing various information) based on the results of performing the test functions, and a settings menu for setting dedicated app functions. Here, the controller 150 has signed up as a member for the server 200 providing the dedicated app and may perform a login procedure using the ID and password when executing the dedicated app and perform one or more functions (including, e.g., a test function or an additional function) of the dedicated app.

Further, when a preset test menu item is selected on the app execution result screen displayed on the display unit 130, the controller 150 displays, on the display unit 130, a test screen including information about one or more tests corresponding to the selected test menu item. In this case, the information about the test may exclude information about one or more tests performed by the user of the terminal 100 from among a plurality of tests registered in the server 200 and may include information about one or more tests not performed by the user. The information about the test includes information for performing tests, such as MBTI (The Myers-Briggs Type Indicator), character, personality, affection, mental health, blood type, left and right brain bias, picture, etc. and a plurality of questionnaire items for performing the test are configured in the form of an ontology. Further, the questionnaire items are composed of (or formed of/include) a class item indicating the type of questionnaire (including, e.g., affection, health, personality test, etc.), an instance item indicating the name of the questionnaire (including, e.g., affection, lack of affection, love type, jealousy, health, depression, dementia, brain anger, personality, MBTI, egograms, etc.), an attribute item indicating questionnaire results, and a relationship item indicating the relationship between questionnaire result values (including, e.g., love, affection, healthy, health, diverse, personality, etc.). Here, the type of test (or type of test related to information about the test) may include a character test, a personality test, an affection test, a blood type test, an emotional quotient test, an egogram test, an anger test, aggression test, an honesty test, etc. (or including a social test, an emotional test, and a practical test) and may include all types of tests (or questionnaires) that humans and animals may answer, such as favorite foods, pets, etc.

Further, when information about any one test is selected from among information about one or more tests included in the test screen displayed on the display unit 130 according to the user's selection (or user input/touch/control), the controller 150 performs the test function for the test corresponding to the selected information about the test in conjunction with the server 200.

In other words, when information about any one test is selected from among the information about one or more tests included in the test screen displayed on the display unit 130 according to the user's selection (or user input/touch/control), the controller 150 transmits the selected information about the test and identification information about the terminal 100 to the server 200 through the communication unit 110. Here, the identification information about the terminal 100 includes a mobile directory number (MDN), a mobile IP, a mobile MAC, subscriber identity module (SIM) card unique information, a serial number, etc.

Further, the controller 150 receives, through the communication unit 110, test information including a plurality of questionnaire items transmitted from the server 200, in response to the transmitted information about any one test.

Further, the controller 150 outputs the received test information including the plurality of questionnaire items through the display unit 130 and/or the audio output unit 140.

Further, the controller 150 receives a plurality of input values according to the user input in response to the plurality of questionnaire items included in the test information displayed on the display unit 130.

Further, the controller 150 transmits the plurality of input values corresponding to the received test information and identification information about the terminal 100 to the server 200 through the communication unit 110 and performs the test function related to the test corresponding to the information about the selected test.

Further, the controller 150 receives the test function execution result, provided from the server 200, through the communication unit 110.

Further, the controller 150 outputs the received test function execution result through the display unit 130 and/or the audio output unit 140.

Further, the controller 150 receives interaction scores and an average interaction score, provided from the server 200, through the communication unit 110. Here, the interaction score may be calculated for each test item according to a result of performing one or more test functions by the terminal 100 based on an evaluation score preset for each test item according to the test type. Further, the average interaction score may be calculated by dividing the total of the calculated interaction scores (or the respective interaction scores of the test items) by the total number of the tests performed by the terminal 100.

Further, the controller 150 outputs the received interaction scores and average interaction score through the display unit 130 and/or the audio output unit 140.

Further, the controller 150 receives comparison information, provided from the server 200, through the communication unit 110. Here, the comparison information may be information resultant from comparing the interaction score of a specific test item related to the user of the terminal 100 with the interaction score of a specific test item related to another user, based on the interaction scores according to the results of performing the tests by the terminal 100 (or the respective interaction scores of the test items).

Further, the controller 150 outputs the received comparison information through the display unit 130 and/or the audio output unit 140.

As such, the controller 150 easily identifies the user's propensity or arouse interest in the test by comparing the interaction score for each test item between the user of the terminal 100 and another user having a relationship with the user or in a similar environment to that of the user.

Further, when a preset additional function menu item is selected on the app execution result screen displayed on the display unit 130, the controller 150 displays an additional function screen corresponding to the selected additional function menu item, on the display unit 130. In this case, the additional function menu is activated only when one or more test functions are performed on the terminal 100 and, if the test function is not performed on the terminal 100, remains inactive.

Further, when any one function is selected from among the plurality of functions included in the additional function screen displayed on the display unit 130 (or from among a plurality of functions displayed on one side of the display unit 130) according to the user's selection, the controller 150 applies (or reflects) the test function execution result (or the questionnaire data) to perform the selected function in conjunction with the server 200. Here, the plurality of functions include a four-pillars-of-destiny information comparison function (or Ba-Zi information comparison function), a genotype information comparison function, an information sharing function, a friend recommendation function (or including dating, making friends, etc.), a test recommendation function according to user input data, a test recommendation function based on accumulated questionnaire data/calculated interaction score, an accumulated questionnaire data sale function, a comment addition function on accumulated questionnaire data, a job search/recruitment function based on accumulated questionnaire data/calculated interaction score, an additional test function for specialized technical field, a future planning/job recommendation function, and a personal customized health information recommendation function (or a function to recommend a health solution optimized for a person).

Further, the controller 150 receives the function execution result, provided from the server 200, through the communication unit 110 and outputs the received function execution result through the display unit 130 and/or the audio output unit 140.

In other words, when the four-pillars-of-destiny information comparison function is selected from among the plurality of functions displayed on one side of the display unit 130 according to the user's selection, the controller 150 transmits information about the selected four-pillars-of-destiny information comparison function and identification information about the terminal 100 to the server 200 through the communication unit 110.

Further, in response to the transmitted information about the four-pillars-of-destiny information comparison function, the controller 150 receives, through the communication unit 110, a result of comparison between the test function execution result transmitted from the server 200 and the four-pillars-of-destiny information.

Further, the controller 150 outputs the result of comparison between the received test function execution result and the four-pillars-of-destiny information through the display unit 130 and/or the audio output unit 140. In this case, the controller 150 may display the comparison result (or comparison data) in various graph forms (including, e.g., a circle, a bar, a line, etc.) on the display unit 130.

Further, when the genotype information comparison function is selected from among the plurality of functions displayed on one side of the display unit 130 according to the user's selection, the controller 150 transmits information about the selected genotype information comparison function and identification information about the terminal 100 to the server 200 through the communication unit 110.

Further, the controller 150 receives, through the communication unit 110, information about the user's innate personality or propensity generated by combining the DNA analysis result or medical treatment information related to the user of the terminal 100 with the test function execution result related to health related to the user of the terminal 100, transmitted from the server 200 in response to the transmitted information about the genotype information comparison function.

Further, the controller 150 outputs the received information about the user's innate personality and propensity through the display unit 130 and/or the audio output unit 140.

Further, when the information sharing function is selected from among the plurality of functions displayed on one side of the display unit 130 according to the user's selection, the controller 150 transmits information about the selected information sharing function, information about the result of performing one or more test functions to be shared, and identification information about the terminal 100 to the server 200 through the communication unit 110.

Further, the controller 150 may register (or upload) the result (or the questionnaire data) of performing one or more tests to be shared, related to the user of the terminal 100, to the account related to the user of the terminal 100 under the control of the server 200, according to the information about the result of performing one or more tests to be shared, transmitted to the server 200, thereby performing a function for sharing, with another user, the test function execution result related to the user or a function for sharing opinions (or comments) between the user and the other user.

As such, the controller 150 may interwork with the server 200 to register the result of performing one or more test functions to be shared, to one web portal cluster or social media account related to the user, based on the information about the information sharing function and the information about the result of performing one or more test functions to be shared.

Further, when the friend recommendation function (or including dating or friend making) is selected from among the plurality of functions displayed on one side of the display unit 130 according to the user's selection, the controller 150 transmits information about the selected friend recommendation function and identification information about the terminal 100 to the server 200 through the communication unit 110.

Further, the controller 150 receives, through the communication unit 110, information about one or more other users reflecting the purpose of friend recommendation, provided from the server 200 200, in response to the transmitted information about the friend recommendation function.

Further, the controller 150 outputs the received information about one or more other users through the display unit 130 and/or the audio output unit 140.

Therefore, the user of the terminal 100 may date or make friends, by exchanging contact information, with another user according to the purpose of friend recommendation based on the displayed information about one or more users.

Further, when the function of recommending a test according to user input data is selected from among the plurality of functions displayed on one side of the display unit 130 according to the user's selection, the controller 150 transmits information about the selected function of recommending a test according to user input data, user input data, and identification information about the terminal 100 to the server 200 through the communication unit 110.

Further, the controller 150 receives other test information including a plurality of other questionnaire items from the server 200 in response to the transmitted information about the function of recommending a test according to user input data and the user input data.

Further, the controller 150 outputs the received other test information including the plurality of other questionnaire items through the display unit 130 and/or the audio output unit 140.

Further, the controller 150 receives a plurality of input values according to the user input in response to the plurality of other questionnaire items included in the other test information displayed.

Further, the controller 150 transmits (or registers) the plurality of other input values corresponding to the received other test information and identification information about the terminal 100 to the server 200 through the communication unit 110 and performs the test function related to the other test corresponding to the other test information.

Further, when the test recommendation function based on accumulated questionnaire data (or calculated interaction score) is selected from among the plurality of functions displayed on one side of the display unit 130 according to the user's selection, the controller 150 transmits information about the selected test recommendation function based on accumulated questionnaire data (or calculated interaction score) and identification information about the terminal 100 to the server 200 through the communication unit 110.

Further, the controller 150 performs a test function for another test identified by the server 200 in response to the transmitted information about the test recommendation function based on accumulated questionnaire data (or calculated interaction score) in conjunction with the server 200.

Further, when the accumulated questionnaire data sale function is selected from among the plurality of functions displayed on one side of the display unit 130 according to the user's selection, the controller 150 transmits information about the selected accumulated questionnaire data sale function, information about at least one test performed on the terminal 100, and identification information about the terminal 100 to the server 200 through the communication unit 110.

Further, if the sale for the test function execution result is normally performed by the server 200 in response to the transmitted information about the accumulated questionnaire data sale function and the information about at least one test performed on the terminal 100 to be sold, the controller 150 receives cryptocurrency according to the sold test function execution result through a cryptocurrency account related to the user of the terminal 100.

Further, the controller 150 outputs information about the amount of the cryptocurrency received according to the sale and the sold test function execution result through the display unit 130 and/or the audio output unit 140.

As such, the user may receive cryptocurrency managed by the server 200, as a reward for selling the test function execution result (or questionnaire data).

Further, when the comment addition function for accumulated questionnaire data is selected from among the plurality of functions displayed on one side of the display unit 130 according to the user's selection, the controller 150 transmits information about the selected comment addition function for accumulated questionnaire data, the result of performing the test function to add a comment (or questionnaire data to add a comment/type of questionnaire data), a user comment to be added to the test function execution result (or questionnaire data) according to the user input, and identification information about the terminal 100 to the server 200 through the communication unit 110.

As such, the controller 150 may add the comment of the user of the terminal 100 to the test function execution result and manage them.

Further, when the job search/recruitment function based on accumulated questionnaire data/calculated interaction score is selected from among the plurality of functions displayed on one side of the display unit 130 according to the user's selection, the controller 150 transmits information about the selected job search/recruitment function based on accumulated questionnaire data/calculated interaction score and identification information about the terminal 100 to the server 200 through the communication unit 110.

Further, the controller 150 receives, through the communication unit 110, one or more recruitment information reflecting the characteristics of the user of the terminal 100 from the server 200 in response to the transmitted information about the job search/recruitment function based on accumulated questionnaire data/calculated interaction score.

Further, the controller 150 outputs the received one or more recruitment information through the display unit 130 and/or the audio output unit 140.

Further, the controller 150 (or the user of the terminal 100) may perform a job search activity (or job hunting activity) based on the received one or more job recruitment information.

Further, when the additional test function for specialized technical field is selected from among the plurality of functions displayed on one side of the display unit 130 according to the user's selection, the controller 150 transmits information about the selected additional test function for specialized technical field and identification information about the terminal 100 to the server 200 through the communication unit 110.

Further, if the server 200 identifies a specialized additional test for each field corresponding to the information about the additional test function for the specialized technical field in response to the transmitted information about the additional test function for the specialized technical field, the controller 150 performs a test function for the identified specialized additional test for each field, in conjunction with the server 200.

Further, the controller 150 outputs the test function execution result for the specialized additional test for each field, provided from the server 200, through the display unit 130 and/or the audio output unit 140.

As such, the user of the terminal 100 may perform a specialized separate additional test function in relation to the user, in conjunction with the server 200.

For example, if the user of the terminal 100 is a major in biology, the controller 150 may perform an examination, test, or survey function related to biology and provide the test function execution result for the field in conjunction with the server 200.

Further, when the future planning/job recommendation function is selected from among the plurality of functions displayed on one side of the display unit 130 according to the user's selection, the controller 150 transmits information about the selected future planning/job recommendation function and identification information about the terminal 100 to the server 200 through the communication unit 110.

Further, the controller 150 receives, through the communication unit 110, the future planning information and recommended job information from the server 200 in response to the transmitted information about future planning/job recommendation function.

Further, the controller 150 outputs the received future planning information and recommended job information through the display unit 130 and/or the audio output unit 140.

According to an embodiment of the present invention, it is described that the terminal 100 performs the test functions and additional functions through a dedicated app which is provided from the server 200 and previously installed on the terminal 100. However, without being limited thereto, the terminal 100 may access a webpage, provided from the server 200, to perform the test functions and the additional functions, as well as using the dedicated app.

The server 200 communicates with the terminal 100.

Further, the server 200 may include components corresponding to the communication unit 110, the storage unit 120, the display unit 130, the audio output unit 140, and the controller 150, respectively, of the terminal 100.

Further, the server 200 performs a signup procedure for the user of the terminal 100.

In other words, the server 200 performs a procedure for the terminal 100 to sign up as a general member.

Further, the server 200 registers personal information related to the user of the terminal 100. In this case, the server 200 may register (or manage) the personal information in a DB server (not shown).

Further, the server 200 performs a member management function for the user of the terminal 100.

Further, the server 200 provides a dedicated app and/or website, which provides the test functions and additional functions, to the terminal 100.

Further, the server 200 provides a bulletin board function for notifications and events.

Further, when information about any one test is selected from among information about one or more tests included in the test screen displayed on the terminal 100 according to the user's selection (or user input/touch/control), the server 200 performs the test function for the test corresponding to the selected information about the test in conjunction with the terminal 100.

In other words, when information about any one test is selected from among information about one or more tests included in the test screen displayed on the terminal 100 according to the user's selection (or user input/touch/control), the server 200 receives information about any one test and the identification information about the terminal 100 from the terminal 100.

Further, the server 200 identifies the test corresponding to the received information about any one test among a plurality of tests pre-stored (or stored) in the server 200.

Further, the server 200 transmits test information including a plurality of questionnaire items related to the identified test to the terminal 100.

Further, the server 200 receives a plurality of input values corresponding to the test information and the identification information about the terminal 100 from the terminal 100.

Further, the server 200 performs a test function related to the test corresponding to information about the selected any one test according to the received plurality of input values corresponding to the test information.

Further, the server 200 matches (or maps) the test function execution result (or questionnaire data) according to the performing the test function with the terminal 100 with user information related to the user of the terminal 100 and creates a database therefor. Here, the user information includes a unique ID (or unique identifier/unique code), name, or resident registration number related to the user of the terminal 100.

Further, the server 200 provides the test function execution result to the terminal 100.

Further, the server 200 calculates the interaction scores (or the respective interaction scores of the test items) indicating the user's characteristics for each test item corresponding to the test type based on the results of performing one or more test functions corresponding to one or more tests performed on the terminal 100 (or performed in relation to the user of the terminal 100). In this case, the server 200 may calculate the average interaction score by dividing the sum of the calculated interaction scores related to the user of the terminal 100 by the total number of the tests performed on the terminal 100.

In other words, the server 200 calculates the interaction score for each test item according to the results of performing one or more test functions corresponding to one or more tests performed on the terminal 100 based on an evaluation score preset for each test item according to the test type and calculates the average interaction score by dividing the sum of the calculated interaction scores (or the respective interaction scores of the test items) by the total number of the tests performed on the terminal 100. In this case, if a plurality of different test functions are performed for the test item, the interaction score related to the test item may be the accrued score or average score related to the plurality of different test functions.

Further, the server 200 provides the calculated interaction scores (or the respective interaction scores of the test items) and the average interaction score to the terminal 100.

Further, the server 200 generates comparison information between the questionnaire data (or test function execution result) related to the user of the terminal 100 and the questionnaire data related to another user corresponding to the terminal 100, using the calculated interaction scores (or interaction score representing the user's characteristics/interaction score related to the terminal 100).

Further, the server 200 provides the generated comparison information to the terminal 100 and another terminal (not shown) related to the other user.

In other words, the server 200 identifies the test items whose interaction scores are high among the calculated per-test item interaction scores (or score test items of a preset number of highest interaction scores among the calculated per-test item interaction scores) (e.g., test items whose interaction scores are highest, second highest, and third highest among nine per-item interaction scores). In this case, the server 200 may identify a specific test item according to the user's selection in conjunction with the terminal 100.

Further, the server 200 compares the interaction score corresponding to the test item with the high interaction score identified among the interaction scores for the plurality of test items corresponding to a plurality of other users related to the user of the terminal 100 (e.g., other users of similar ages, other users of the same gender, or other users registered, as friends, in the server 200), with the interaction score corresponding to the test item of the high interaction score.

Further, the server 200 generates comparison information corresponding to the results of comparison between the interaction score related to the terminal 100 and the interaction scores corresponding to the plurality of other users in relation to the test item of the high interaction score. Here, the comparison information may be information resultant from comparing the interaction score of a specific test item related to the user of the terminal 100 with the interaction score of a specific test item related to another user, based on the interaction scores according to the results of performing the tests by the terminal 100 (or the respective interaction scores of the test items).

Further, the server 200 provides the generated comparison information to the terminal 100 and another terminal (not shown) related to the other user.

Further, when any one function is selected from among the plurality of functions included in the additional function screen displayed on the terminal 100 (or from among a plurality of functions displayed on one side of the terminal 100) according to the user's selection, the server 200 applies (or reflects) the test function execution result (or the questionnaire data) to perform the selected function in conjunction with the terminal 100. Here, the plurality of functions include a four-pillars-of-destiny information comparison function, a genotype information comparison function, an information sharing function, a friend recommendation function (or including dating, making friends, etc.), a test recommendation function according to user input data, a test recommendation function based on accumulated questionnaire data/calculated interaction score, an accumulated questionnaire data sale function, a comment addition function on accumulated questionnaire data, a job search/recruitment function based on accumulated questionnaire data/calculated interaction score, an additional test function for specialized technical field, a future planning/job recommendation function, and a personal customized health information recommendation function (or a function to recommend a health solution optimized for a person).

Further, the server 200 provides a function execution result to the terminal 100.

In other words, when the four-pillars-of-destiny information comparison function is selected from among the plurality of functions displayed on one side of the terminal 100 according to the user's selection, the server 200 receives information about the four-pillars-of-destiny information comparison function and identification information about the terminal 100 from the terminal 100.

Further, the server 200 identifies the four-pillars-of-destiny information related to the user of the terminal 100 using information, such as the year, month, day, and time of birth, related to the terminal 100, pre-registered in the server 200 based on the received information about the four-pillars-of-destiny information comparison function. In this case, the server 200 may receive the four-pillars-of-destiny information related to the user of the terminal 100 from another external server.

Further, the server 200 compares the test function execution result related to the social test, emotional test, or practical test among the accumulated test function execution results (or accumulated questionnaire data) in relation to the terminal 100 with the identified four-pillars-of-destiny information, generating a comparison result from comparing the test result for each individual with the innate four-pillars-of-destiny information.

Further, the server 200 transmits, to the terminal 100, the result of comparison between the generated test function execution result and the four-pillars-of-destiny information (or the result of comparison between the test result for each individual and the four-pillars-of-destiny information). In this case, the server 200 matches the keywords and content of the generated test function execution result in a database (not shown) and configure it so that the integrated data established in the database and the four-pillars-of-destiny information may be compared therebetween.

Further, the server 200 may provide the comparison result (or comparison data) in various graph forms (including, e.g., a circle, a bar, a line, etc.), to the terminal 100.

Further, when the genotype information comparison function is selected from among the plurality of functions displayed on one side of the terminal 100 according to the user's selection, the server 200 receives information about the genotype information comparison function and identification information about the terminal 100 from the terminal 100.

Further, the server 200 interworks with a hospital server (not shown) based on the received information about the genotype information comparison function to identify (or search) the DNA analysis result or medical treatment information related to the user of the terminal 100.

Further, the server 200 generates information about the user's innate personality or propensity (or comparison result for the user's innate personality or propensity) by combining the test function execution result related to health, the DNA analysis result related to the user of the terminal 100, and medical treatment information, among the accumulated test function execution results (or accumulated questionnaire data) in relation to the terminal 100.

Further, the server 200 transmits the generated information about the user's innate personality or propensity to the terminal 100.

Further, when the information sharing function is selected from among the plurality of functions displayed on one side of the terminal 100 according to the user's selection, the server 200 receives information about the information sharing function, information about the result of performing one or more test functions to be shared, and identification information about the terminal 100 from the terminal 100.

Further, the server 200 registers (or uploads) the result (or the questionnaire data) of performing one or more tests to be shared, related to the user of the terminal 100 on one web portal cluster or social media service, to the account related to the user of the terminal 100, based on the received information about the information sharing function and information about the result of performing one or more tests to be shared, thereby performing a function for sharing, with another user, the test function execution result related to the user or a function for sharing opinions (or comments) between the user and the other user.

Further, when the friend recommendation function (or including dating or friend making) is selected from among the plurality of functions displayed on one side of the terminal 100 according to the user's selection, the server 200 receives information about the friend recommendation function and identification information about the terminal 100 from the terminal 100.

Further, the server 200 categorizes the results of performing the plurality of test functions related to a plurality of users previously registered in the server 200 based on the received information about the friend recommendation function, per additional item, such as race, gender, age, propensity, and personality.

Further, the server 200 identifies one or more other users who show similar propensity, personality, or character to the user of the terminal 100 considering the purpose of friend recommendation (e.g., dating or making friends) among the plurality of categorized test function execution results and provides information about the identified one or more users to the terminal 100.

Further, when the function of recommending a test according to user input data is selected from among the plurality of functions displayed on one side of the terminal 100 according to the user's selection, the server 200 receives information about the function of recommending a test according to user input data, user input data, and identification information about the terminal 100 from the terminal 100.

Further, the server 200 identifies one or more other tests corresponding to the received user input data among a plurality of tests pre-registered in the server 200.

Further, the server 200 transmits other test information including a plurality of other questionnaire items related to the identified one or more tests to the terminal 100.

Further, the server 200 performs the test function related to the other test based on the identification information about the terminal 100 and the plurality of other input values corresponding to the other test information transmitted (or registered) from the terminal 100.

Further, the server 200 provides the test function execution result related to the other test to the terminal 100.

Further, when the test recommendation function based on accumulated questionnaire data (or calculated interaction score) is selected from among the plurality of functions displayed on one side of the terminal 100 according to the user's selection, the server 200 receives information about the test recommendation function based on accumulated questionnaire data (or calculated interaction score) and identification information about the terminal 100 from the terminal 100.

Further, the server 200 identifies one or more other tests related to the test item of the high interaction score in relation to the user of the terminal 100 based on the received accumulated questionnaire data (or calculated interaction score) among the plurality of tests pre-registered in the server 200.

Further, the server 200 performs a test function for the identified other test in conjunction with the terminal 100.

Further, when the accumulated questionnaire data sale function is selected from among the plurality of functions displayed on one side of the terminal 100 according to the user's selection, the server 200 receives information about the accumulated questionnaire data sale function, information about at least one test performed on the terminal 100, and identification information about the terminal 100 from the terminal 100.

Further, the server 200 provides a purchaser terminal (not shown) with at least one test function execution result related to at least one test performed on the terminal 100 based on the received accumulated questionnaire data sale function information and information about the at least one test performed on the terminal 100.

Further, the server 200 provides cryptocurrency according to the sold test function execution result to the cryptocurrency account related to the user of the terminal 100 as the test function execution result is provided.

Further, the server 200 receives cryptocurrency, corresponding to the purchase cost according to the sold test function execution result, through the account related to the server 200, from the purchaser terminal.

As such, the user receives cryptocurrency, managed by the server 200, as a reward for the sale of the test function execution result (or questionnaire data), and various demanding organizations (including, e.g., research centers, institutions, companies, hospitals, etc.) requiring the user's test function execution result may purchase the test function execution result using the cryptocurrency managed by the server 200.

Further, when the comment addition function for accumulated questionnaire data is selected from among the plurality of functions displayed on one side of the terminal 100 according to the user's selection, the server 200 receives information about the comment addition function for accumulated questionnaire data, the result of performing the test function to add a comment (or questionnaire data to add a comment/type of questionnaire data), a user comment to be added to the test function execution result (or questionnaire data) according to the user input, and identification information about the terminal 100 from the terminal 100.

Further, the server 200 identifies the test function execution result (or questionnaire data) corresponding to the test function execution result to add a comment (or questionnaire data/type of questionnaire data to add a comment) among the test function execution results related to the user of the terminal 100 based on the received information about the comment addition function for accumulated questionnaire data, the test function execution result to add a comment (or questionnaire data/type of questionnaire data to add a comment), and user comment to be added to the test function execution result (or questionnaire data) according to the user input.

Further, the server 200 adds (or interworks/maps/matches) the received user comment to the identified test function execution result (or questionnaire data).

Further, when the job search/recruitment function based on accumulated questionnaire data/calculated interaction score is selected from among the plurality of functions displayed on one side of the terminal 100 according to the user's selection, the server 200 receives information about the job search/recruitment function based on accumulated questionnaire data/calculated interaction score and identification information about the terminal 100 from the terminal 100.

Further, the server 200 identifies one or more recruitment information having a high interaction score and/or the test function execution result related to the user of the terminal 100 among a plurality of pre-registered recruitment information from a plurality of recruitment terminals (not shown) based on the received job search/recruitment function information.

Further, the server 200 provides the one or more identified recruitment information to the terminal 100.

Further, when the additional test function for specialized technical field is selected from among the plurality of functions displayed on one side of the terminal 100 according to the user's selection, the server 200 receives information about the additional test function for specialized technical field and identification information about the terminal 100 from the terminal 100.

Further, the server 200 identifies the per-field specialized additional test corresponding to the received information about the additional test function for the specialized technical field among a plurality of tests pre-registered in the server 200.

Further, the server 200 performs a test function for the identified per-field specialized additional test in conjunction with the terminal 100.

Further, when the future planning/job recommendation function is selected from among the plurality of functions displayed on one side of the terminal 100 according to the user's selection, the server 200 receives information about the future planning/job recommendation function and identification information about the terminal 100 from the terminal 100.

Further, the server 200 identifies future planning information and recommended job information appropriate for the user's personality based on the received future planning/job recommendation function information, one or more test function execution results related to the user of the terminal 100, and the interaction score.

Further, the server 200 transmits the identified future planning information and recommended job information to the terminal 100.

As such, the server 200 may systemically classify per-user characteristics, according to each test item, with respect to the database information (or the test function execution result/questionnaire data) in relation to the user of the terminal 100, test function the customized information (or customized test) appropriate for the user's characteristics to other users through various media (including, e.g., the Internet), and establish a user-customized social media service that is searchable and rankable.

Further, the server 200 may establish an ontology form of various questionnaire items included in test information, standardize and store various data, provide a specialized search engine (including, e.g., semantic web) (not shown) based on accumulated data (or per-user test function execution results), and sell it to various demanding organizations requiring standardized data.

In this case, the server 200 defines the various questionnaire items in an ontology language.

Further, the questionnaire items (or questionnaire items configured in the ontology language) are composed of (or formed of/include) a class item indicating the type of questionnaire (including, e.g., affection, health, personality test, etc.), an instance item indicating the name of the questionnaire (including, e.g., affection, lack of affection, love type, jealousy, health, depression, dementia, brain anger, personality, MBTI, egograms, etc.), an attribute item indicating questionnaire results, and a relationship item indicating the relationship between questionnaire result values (including, e.g., love, affection, healthy, health, diverse, personality, etc.). Here, the defined components are defined in an ontology web language (OWL).

Further, the server 200 may develop various test web pages, such as of personality type, character, personality, affection, mental health, left and right brain bias, blood type-related characteristics, pictures, etc., in hyperlink-based HTML forms that may be easily accessed from desktop computers as well as smart devices and provide the test web pages to the terminal 100.

Further, the server 200 may integrate individual information built through various tests into an integrated database and builds an integrated database based on a master table with personal information.

Further, the server 200 may configure a score table for scoring an individual's personality and propensity, give a score to each test result, express the score values in a matrix form, and store it in XML format.

Further, the server 200 performs interaction correlation scoring and categorization related to correlation of the tests, on the database information and provides comparison information with others.

In other words, the server 200 may configure categories each test per personality (including, e.g., character, interpersonal relationship, field expertise, etc.), create indexes, such as propensity and type, enables them to be searchable and sortable, and create and manage a view table that integrates per-individual test results.

As such, the server 200 may build bigdata related to a specific individual based on questionnaire data for a plurality of tests and provide comparison information obtained by comparing the build bigdata related to the specific individual and other users related to the specific individual.

Further, the server 200 may build bigdata related to a specific individual based on questionnaire data for a plurality of tests and provide additional functions according to information fusion with four-pillars-of-destiny information, genotype information, and person recommendation information related to the specific individual, based on the built bigdata related to the specific individual.

A method for processing and providing customized information based on questionnaire data according to the present invention is described below in detail with reference to FIGS. 1 to 7.

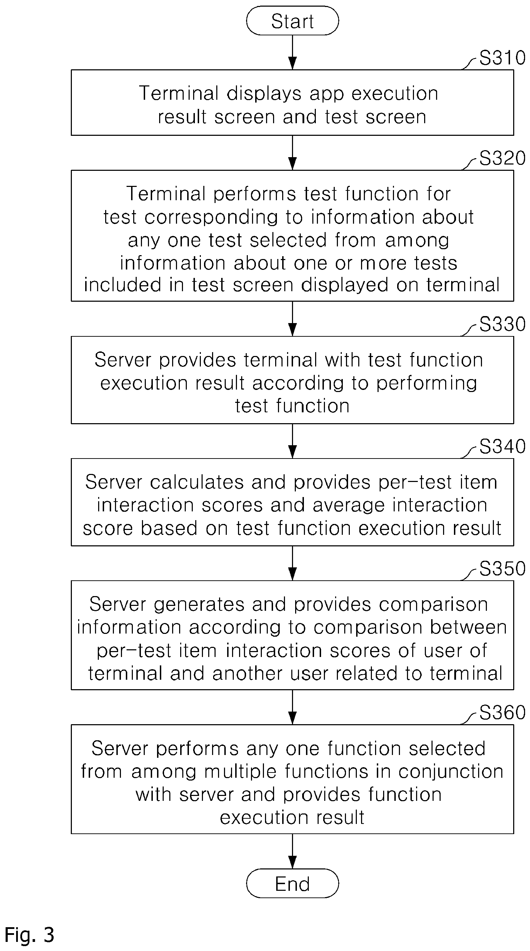

FIG. 3 is a flowchart illustrating a method for processing and providing customized information based on questionnaire data according to an embodiment of the present invention.

Further, the terminal 100 executes a dedicated app previously installed on the terminal 100 and displays an app execution result screen according to the execution of the dedicated app. Here, the app execution result screen includes a test menu (or buttons/items) for performing various types of tests provided from the server 200, an additional function menu for performing various additional functions (or providing various information) based on the results of performing the test functions, and a settings menu for setting dedicated app functions. Here, the terminal 100 has signed up as a member for the server 200 providing the dedicated app and may perform a login procedure using the ID and password when executing the dedicated app and perform one or more functions (including, e.g., a test function or an additional function) of the dedicated app.

Further, when a preset test menu item is selected on the app execution result screen displayed on the terminal 100, the terminal 100 displays a test screen including information about one or more tests corresponding to the selected test menu item. In this case, the information about the test may exclude information about one or more tests performed by the user of the terminal 100 from among a plurality of tests registered in the server 200 and may include information about one or more tests not performed by the user. The information about the test includes information for performing tests, such as MBTI, character, personality, affection, mental health, blood type, left and right brain bias, picture, etc. and a plurality of questionnaire items for performing the test are configured in the form of an ontology. Further, the questionnaire items are composed of (or formed of/include) a class item indicating the type of questionnaire (including, e.g., affection, health, personality test, etc.), an instance item indicating the name of the questionnaire (including, e.g., affection, lack of affection, love type, jealousy, health, depression, dementia, brain anger, personality, MBTI, egograms, etc.), an attribute item indicating questionnaire results, and a relationship item indicating the relationship between questionnaire result values (including, e.g., love, affection, healthy, health, diverse, personality, etc.). Here, the type of test (or type of test related to information about the test) is not limited to a specific one and may include a character test, a personality test, an affection test, a blood type test, an emotional quotient test, an egogram test, an anger test, aggression test, an honesty test, etc. (or including a social test, an emotional test, and a practical test) and may include all types of tests (or questionnaires) that humans and animals may answer, such as favorite foods, pets, etc.

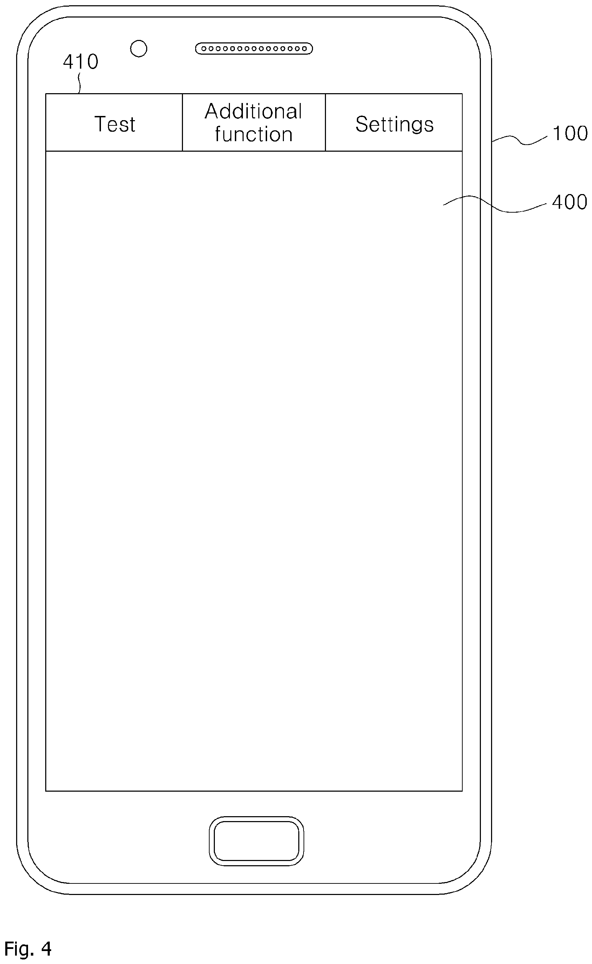

For example, the first terminal 100 executes a survey app previously installed on the first terminal and displays a survey execution result screen 400 as illustrated in FIG. 4.

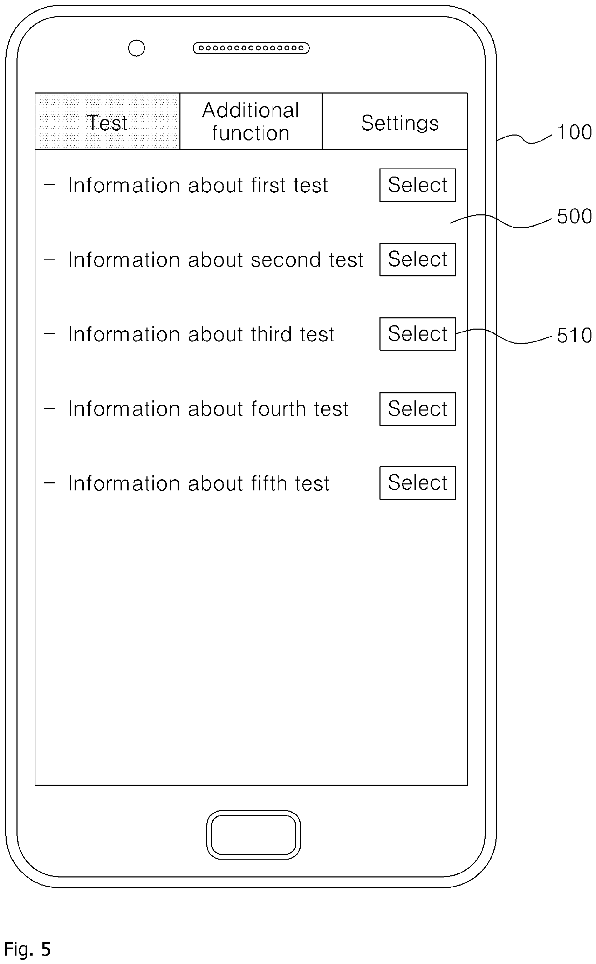

Further, when a test menu item 410 is selected on the survey execution result screen 400, the first terminal displays a first test screen 500, including information about first to fifth tests not performed on the first terminal and provided from the server 200, as illustrated in FIG. 5 (S310).

Thereafter, when information about any one test is selected from among information about one or more tests included in the test screen displayed on the terminal 100 according to the user's selection (or user input/touch/control), the terminal 100 performs the test function for the test corresponding to the selected information about the test in conjunction with the server 200.

In other words, when information about any one test is selected from among the information about one or more tests included in the test screen displayed on the terminal 100 according to the user's selection (or user input/touch/control), the terminal 100 transmits the selected information about the test and identification information about the terminal 100 to the server 200. Here, the identification information about the terminal 100 includes an MDN, a mobile IP, a mobile MAC, subscriber identity module (SIM) card unique information, a serial number, etc.

Further, the server 200 receives identification information about the terminal 100 and information about any one test from the terminal 100.

Further, the server 200 identifies a test corresponding to the received information about any one test among a plurality of tests pre-registered (or stored) in the server 200 and transmits test information including a plurality of questionnaire items related to the identified test to the terminal 100.

Further, the terminal 100 receives test information including a plurality of questionnaire items transmitted from the server 200, in response to the transmitted information about any one test and displays the received test information including the plurality of questionnaire items.

Further, the terminal 100 receives a plurality of input values according to the user input in response to the plurality of questionnaire items included in the test information displayed.

Further, the terminal 100 transmits the plurality of input values corresponding to the received test information and identification information about the terminal 100 to the server 200 and performs the test function related to the test corresponding to the information about the selected test.

Further, the server 200 receives a plurality of input values corresponding to the test information and the identification information about the terminal 100 from the terminal 100.

As an example, when information 510 for the fourth test is selected from among the information about the first test to the fifth test included in the first test screen 500 according to the user's selection, the first terminal transmits the selected information about the fourth test and identification information about the first terminal to the server 200.

Further, the server 200 identifies the fourth test (e.g., the fourth test related to a personality test) corresponding to the information about the fourth test, transmitted from the first terminal, among a plurality of tests pre-registered in the server 200 and transmits a 4-1th questionnaire item and a 4-9th questionnaire item related to the identified fourth test to the first terminal.

Further, the first terminal displays fourth test information transmitted from the server 200, in response to the transmitted information about the fourth test.

Further, the first terminal receives a 4-1th input value (or 4-1th input data) to a 4-9th input value, according to a user input, for the 4-1th questionnaire item to the 4-9th questionnaire item included in the fourth test information, transmits the received 4-1th input value to 4-9th input value and the identification information about the first terminal to the server 200, and registers the plurality of input values related to the fourth test information to the server 200 (S320).

Thereafter, the server 200 matches (or maps) the test function execution result (or questionnaire data) according to the performing the test function with the terminal 100 with user information related to the user of the terminal 100 and creates a database therefor. Here, the user information includes a unique ID (or unique identifier/unique code), name, or resident registration number related to the user of the terminal 100.

Further, the server 200 provides the test function execution result to the terminal 100.

Further, the terminal 100 receives the test function execution result from the server 200 and displays the received test function execution result.

As an example, the server 200 generates a fourth personality test result for the user (e.g., Gildong HONG) of the first terminal based on the 4-1th input value to 4-9th input value related to the personality test performed on Gildong HONG and transmits the generated fourth personality test result to the first terminal.

Further, the first terminal receives the fourth personality test result from the server 200 and outputs the received fourth personality test result (S330).

Thereafter, the server 200 calculates the interaction scores (or the respective interaction scores of the test items) indicating the user's characteristics for each test item corresponding to the test type based on the results of performing one or more test functions corresponding to one or more tests performed on the terminal 100 (or performed in relation to the user of the terminal 100). In this case, the server 200 may calculate the average interaction score by dividing the sum of the calculated interaction scores related to the user of the terminal 100 by the total number of the tests performed on the terminal 100.

In other words, the server 200 calculates the interaction score for each test item according to the results of performing one or more test functions corresponding to one or more tests performed on the terminal 100 based on an evaluation score preset for each test item according to the test type and calculates the average interaction score by dividing the sum of the calculated interaction scores (or the respective interaction scores of the test items) by the total number of the tests performed on the terminal 100. In this case, if a plurality of different test functions are performed for the test item, the interaction score related to the test item may be the accrued score or average score related to the plurality of different test functions.

Here, the server 200 may calculate information related to the performed one or more tests regarding all possible combinations, which may be comprehensively exposed beyond one test, using various artificial intelligence-based machine learning and prediction algorithms, as well as basic calculation methods, such as of the interaction scores, average interaction score, and statistical significance.

In other words, the server 200 may perform machine learning on one or more test function execution results, created as database, corresponding to the one or more tests performed on the terminal 100 and calculate the interaction score for each test item performed on the terminal 100 based on the result of the machine learning and an evaluation score preset for each test item according to the test type.

Further, the server 200 provides the calculated interaction scores (or the respective interaction scores of the test items) and the average interaction score to the terminal 100.

Further, the terminal 100 receives the interaction scores and average interaction score from the server 200 and displays the received interaction scores and average interaction score.

As an example, the server 200 calculates a first interaction score (e.g., 54 points) indicating the user's characteristics, for character item (e.g., 1 point), personality item (e.g., 4 points), affection item (e.g., 7 points), blood type item (e.g., 3 points), emotional quotient item (e.g., 9 points), egogram item (e.g., 5 points), anger item (e.g., 10 points), aggression item (e.g., 10 points), and honesty item (e.g., 5 points), based on the results of performing 15 test functions performed in response to the user of the first terminal, i.e., Gildong HONG, and a plurality of preset evaluation scores per test item.

Further, the server 200 calculates a first average interaction score (e.g., 3.6 points) related to Gildong HONG by dividing the sum (e.g., 54 points) of the interaction scores calculated for a total of 15 tests, including a character test, a personality test, an affection test, a blood type test, an emotion test, an egogram test, an anger test, an aggression test, and a honesty test, performed on the first terminal, by the total number, i.e., 15, of the tests.

Further, the server 200 transmits the calculated first interaction scores (e.g., scores for a total of 9 test items) and the first average interaction score (e.g., 3.6 points) related to Gildong HONG to the first terminal.

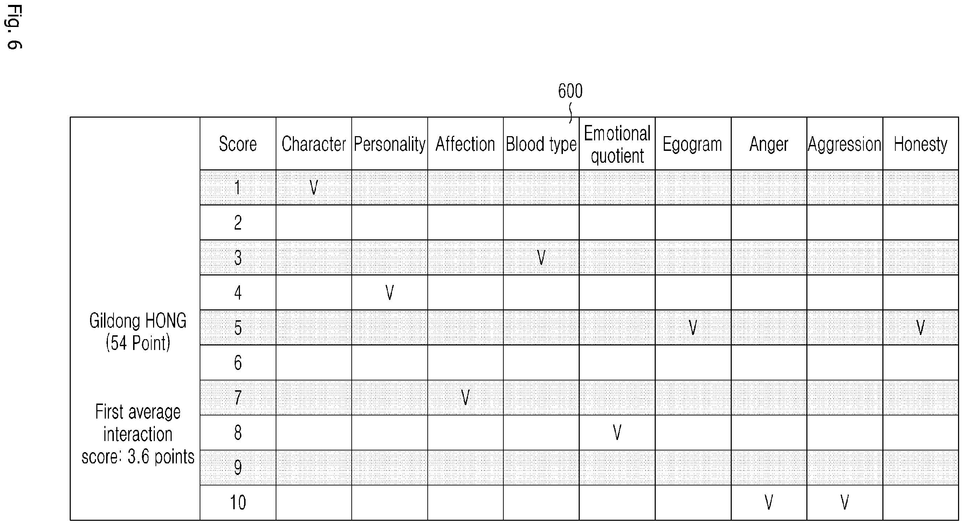

Further, the first terminal receives the first interaction scores (e.g., scores for a total of 9 test items) and the first average interaction score (e.g., 3.6 points) related to Gildong HONG from the server 200 and, as shown in FIG. 6, displays (600) the received first interaction scores (e.g., scores for a total of 9 test items) and the first average interaction score (e.g., 3.6 points) (S340).

Thereafter, the server 200 generates comparison information between the questionnaire data (or test function execution result) related to the user of the terminal 100 and the questionnaire data related to another user corresponding to the terminal 100, using the calculated interaction scores (or interaction score representing the user's characteristics/interaction score related to the terminal 100) and provides the generated comparison information to the terminal 100 and another terminal (not shown) related to the other user.

In other words, the server 200 identifies the test items whose interaction scores are high among the calculated per-test item interaction scores (or score test items of a preset number of highest interaction scores among the calculated per-test item interaction scores). In this case, the server 200 may identify a specific test item according to the user's selection in conjunction with the terminal 100.

Further, the server 200 compares the interaction score corresponding to the test item with the high interaction score identified among the interaction scores for the plurality of test items corresponding to a plurality of other users related to the user of the terminal 100 (e.g., other users of similar ages, other users of the same gender, or other users registered, as friends, in the server 200), with the interaction score corresponding to the test item of the high interaction score.

Further, the server 200 generates comparison information corresponding to the results of comparison between the interaction score related to the terminal 100 and the interaction scores corresponding to the plurality of other users in relation to the test item of the high interaction score.

Further, the server 200 provides the generated comparison information to the terminal 100 and another terminal (not shown) related to the other user.

Further, each of the terminal 100 and the other terminal may receive the comparison information from the server 200 and displays the received comparison information.

As such, the terminal 100 easily identifies the user's propensity or arouse interest in the test by comparing the interaction score for each test item between the user of the terminal 100 and another user having a relationship with the user or in a similar environment to that of the user.

As an example, the server 200 identifies the affection item and the emotional quotient item for which the interaction scores are high among the first interaction scores for 9 test items shown in FIG. 6.

Further, in relation to Gildong HONG who is the user of the first terminal, for an 11th user to a 20th user registered as friends, the server 200 compares the interaction scores corresponding to the tests related to the identified affection item and the emotional quotient item, among the 11th interaction scores per test item, related to the 11th user through the 20th interaction scores per test item, related to the 20th user, with the interaction score (e.g., 7 points) for the first affection item of the first terminal and the interaction score (e.g., 9 points) for the first emotional quotient item, respectively.

Further, the server 200 generates first comparison information, which is a result of comparison between the identified interaction scores corresponding to the tests related to the affection item and the emotional quotient item, among the 11th interaction scores per test item related to the 11th user through the 20th interaction scores per test item related to the 20th user, and the interaction score (e.g., 7 points) for the first affection item of the first terminal and the interaction score (e.g., 9 points) for the first emotional quotient item, respectively.

Further, the server 200 transmits the generated first comparison information to the first terminal.

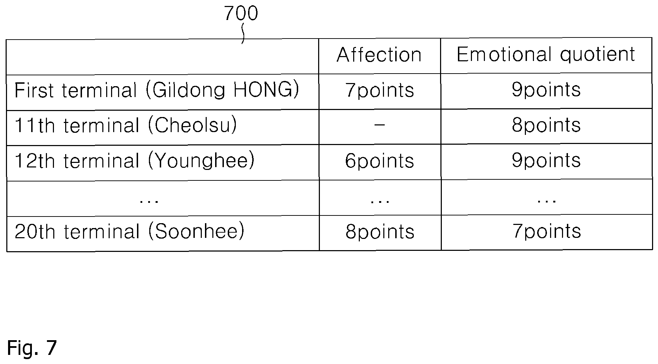

Further, the first terminal receives the first comparison information from the server 200 and, as shown in FIG. 7, displays the received first comparison information 700 (S350).

Thereafter, when a preset additional function menu item is selected on the app execution result screen displayed on the terminal 100, the terminal 100 displays an additional function screen corresponding to the selected additional function menu item. In this case, the additional function menu item may be activated when one or more test functions are performed on the terminal 100.

Further, when any one function is selected from among the plurality of functions included in the additional function screen displayed on the terminal 100 (or from among a plurality of functions displayed on one side of the terminal 100) according to the user's selection, the terminal 100 applies (or reflects) the test function execution result (or the questionnaire data) to perform the selected function in conjunction with the server 200. Here, the plurality of functions include a four-pillars-of-destiny information comparison function, a genotype information comparison function, an information sharing function, a friend recommendation function (or including dating, making friends, etc.), a test recommendation function according to user input data, a test recommendation function based on accumulated questionnaire data/calculated interaction score, an accumulated questionnaire data sale function, a comment addition function on accumulated questionnaire data, a job search/recruitment function based on accumulated questionnaire data/calculated interaction score, an additional test function for specialized technical field, a future planning/job recommendation function, and a personal customized health information recommendation function (or a function to recommend a health solution optimized for an individual).

Further, the terminal 100 receives the function execution result from the server 200 and displays the received function execution result.

In other words, when the four-pillars-of-destiny information comparison function is selected from among the plurality of functions displayed on one side of the terminal 100 according to the user's selection, the terminal 100 transmits information about the selected four-pillars-of-destiny information comparison function and identification information about the terminal 100 to the server 200. Further, the server 200 receives, from the terminal 100, information about the four-pillars-of-destiny information comparison function and the identification information about the terminal 100. Further, the server 200 identifies the four-pillars-of-destiny information related to the user of the terminal 100 using information, such as the year, month, day, and time of birth, related to the terminal 100, pre-registered in the server 200 based on the received information about the four-pillars-of-destiny information comparison function. Further, the server 200 compares the test function execution result related to the social test, emotional test, or practical test among the accumulated test function execution results (or accumulated questionnaire data) in relation to the terminal 100 with the identified four-pillars-of-destiny information, generating a comparison result from comparing the test result for each individual with the innate four-pillars-of-destiny information. Further, the server 200 transmits, to the terminal 100, the result of comparison between the generated test function execution result and the four-pillars-of-destiny information (or the result of comparison between the test result for each individual and the four-pillars-of-destiny information). Further, the terminal 100 receives, from the server 200, the result of comparison between the test function execution result and the four-pillars-of-destiny information and displays the received result of comparison between the test function execution result and the four-pillars-of-destiny information. In this case, the server 200 matches the keywords and content of the generated test function execution result in a database (not shown) and configure it so that the integrated data established in the database and the four-pillars-of-destiny information may be compared therebetween. Further, the server 200 may provide the comparison result (or comparison data) in various graph forms (including, e.g., a circle, a bar, a line, etc.), to the terminal 100.

Further, when the genotype information comparison function is selected from among the plurality of functions displayed on one side of the terminal 100 according to the user's selection, the terminal 100 transmits information about the selected genotype information comparison function and identification information about the terminal 100 to the server 200. Further, the server 200 receives, from the terminal 100, information about the genotype information comparison function and the identification information about the terminal 100. Further, the server 200 interworks with a hospital server (not shown) based on the received information about the genotype information comparison function to identify (or search) the DNA analysis result or medical treatment information related to the user of the terminal 100. Further, the server 200 generates information about the user's innate personality or propensity (or comparison result for the user's innate personality or propensity) by combining the test function execution result related to health, the DNA analysis result related to the user of the terminal 100, and medical treatment information, among the accumulated test function execution results (or accumulated questionnaire data) in relation to the terminal 100. Further, the server 200 transmits the generated information about the user's innate personality or propensity to the terminal 100. Further, the terminal 100 receives information about the user's innate personality or propensity generated by combining the DNA analysis result or medical treatment information related to the user of the terminal 100 with the test function execution result related to health related to the user of the terminal 100, transmitted from the server 200 and displays the received information about the user's innate personality or propensity.

Further, when the information sharing function is selected from among the plurality of functions displayed on one side of the terminal 100 according to the user's selection, the terminal 100 transmits information about the selected information sharing function, information about the result of performing one or more test functions to be shared, and identification information about the terminal 100 to the server 200. Further, the server 200 receives, from the terminal 100, the information about the information sharing function, information about one or more test function execution results to be shared, and the identification information about the terminal 100. Further, the server 200 registers (or uploads) the result (or the questionnaire data) of performing one or more tests to be shared, related to the user of the terminal 100 on one web portal cluster or social media service, to the account related to the user of the terminal 100, based on the received information about the information sharing function and information about the result of performing one or more tests to be shared, thereby performing a function for sharing, with another user, the test function execution result related to the user or a function for sharing opinions (or comments) between the user and the other user.

Further, when the friend recommendation function (or including dating or friend making) is selected from among the plurality of functions displayed on one side of the terminal 100 according to the user's selection, the terminal 100 transmits information about the selected friend recommendation function and identification information about the terminal 100 to the server 200. Further, the server 200 receives, from the terminal 100, the information about the friend recommendation function and the identification information about the terminal 100. Further, the server 200 categorizes the results of performing the plurality of test functions related to a plurality of users previously registered in the server 200 based on the received information about the friend recommendation function, per additional item, such as race, gender, age, propensity, and personality. Further, the server 200 identifies one or more other users who show similar propensity, personality, or character to the user of the terminal 100 considering the purpose of friend recommendation (e.g., dating or making friends) among the plurality of categorized test function execution results and provides information about the identified one or more users to the terminal 100. Further, the terminal 100 receives, from the server 200, information about one or more other users reflecting the purpose of friend recommendation and displays the received information about the one or more other users.

Further, when the function of recommending a test according to user input data is selected from among the plurality of functions displayed on one side of the terminal 100 according to the user's selection, the terminal 100 transmits information about the selected function of recommending a test according to user input data, user input data, and identification information about the terminal 100 to the server 200. Further, the server 200 receives, from the terminal 100, the information about the test recommendation function according to user input data, the user input data, and the identification information about the terminal 100. Further, the server 200 identifies one or more other tests corresponding to the received user input data among a plurality of tests pre-registered in the server 200. Further, the server 200 transmits other test information including a plurality of other questionnaire items related to the identified one or more tests to the terminal 100. Further, the terminal 100 receives, from the server 200, other test information including a plurality of other questionnaire items and displays the received other test information including the plurality of other questionnaire items. Further, the terminal 100 receives a plurality of input values according to the user input in response to the plurality of other questionnaire items included in the other test information displayed. Further, the terminal 100 transmits (or registers) the plurality of other input values corresponding to the received other test information and identification information about the terminal 100 to the server 200 and performs the test function related to the other test corresponding to the other test information.

Further, when the test recommendation function based on accumulated questionnaire data (or calculated interaction score) is selected from among the plurality of functions displayed on one side of the terminal 100 according to the user's selection, the terminal 100 transmits information about the selected test recommendation function based on accumulated questionnaire data (or calculated interaction score) and identification information about the terminal 100 to the server 200. Further, the server 200 receives, from the terminal 100, the information about the test recommendation function based on accumulated questionnaire data (or calculated interaction score) and the identification information about the terminal 100. Further, the server 200 identifies one or more other tests related to the test item of the high interaction score in relation to the user of the terminal 100 based on the received accumulated questionnaire data (or calculated interaction score) among the plurality of tests pre-registered in the server 200. Further, the server 200 performs a test function for the identified other test in conjunction with the terminal 100.

Further, when the accumulated questionnaire data sale function is selected from among the plurality of functions displayed on one side of the terminal 100 according to the user's selection, the terminal 100 transmits information about the selected accumulated questionnaire data sale function, information about at least one test performed on the terminal 100, and identification information about the terminal 100 to the server 200. Further, the server 200 receives information about the accumulated questionnaire data sale function, information about at least one test performed on the terminal 100, and identification information about the terminal 100 from the terminal 100. Further, the server 200 provides a purchaser terminal (not shown) with at least one test function execution result related to at least one test performed on the terminal 100, based on the received information about the accumulated questionnaire data sale function and information about at least one test performed on the terminal 100, provides cryptocurrency according to the sold test function execution result to the cryptocurrency account related to the user of the terminal 100 as the test function execution result is provided, and receives, from the purchaser terminal, the cryptocurrency corresponding to the purchase cost according to the sold test function execution result, through the account related to the server 200.

As such, the user receives cryptocurrency, managed by the server 200, as a reward for the sale of the test function execution result (or questionnaire data), and various demanding organizations (including, e.g., research centers, institutions, companies, hospitals, etc.) requiring the user's test function execution result may purchase the test function execution result using the cryptocurrency managed by the server 200.

Further, when the comment addition function for accumulated questionnaire data is selected from among the plurality of functions displayed on one side of the terminal 100 according to the user's selection, the terminal 100 transmits information about the selected comment addition function for accumulated questionnaire data, the result of performing the test function to add a comment (or questionnaire data to add a comment/type of questionnaire data), a user comment to be added to the test function execution result (or questionnaire data) according to the user input, and identification information about the terminal 100 to the server 200. Further, the server 200 receives information about the comment addition function for accumulated questionnaire data, the result of performing the test function to add a comment (or questionnaire data to add a comment/type of questionnaire data), a user comment to be added to the test function execution result (or questionnaire data) according to the user input, and identification information about the terminal 100 from the terminal 100. Further, the server 200 identifies the test function execution result (or questionnaire data) corresponding to the test function execution result to add a comment (or questionnaire data/type of questionnaire data to add a comment) among the test function execution results related to the user of the terminal 100 based on the received information about the comment addition function for accumulated questionnaire data, the test function execution result to add a comment (or questionnaire data/type of questionnaire data to add a comment), and user comment to be added to the test function execution result (or questionnaire data) according to the user input and adds (or interworks/maps/matches) the received user comment to the identified test function execution result and manages them.

Further, when the job search/recruitment function based on accumulated questionnaire data/calculated interaction score is selected from among the plurality of functions displayed on one side of the terminal 100 according to the user's selection, the terminal 100 transmits information about the selected job search/recruitment function based on accumulated questionnaire data/calculated interaction score and identification information about the terminal 100 to the server 200. Further, the server 200 receives, from the terminal 100, the information about the job search/recruitment function based on accumulated questionnaire data/calculated interaction score and the identification information about the terminal 100. Further, the server 200 identifies one or more recruitment information having a high interaction score and/or the test function execution result related to the user of the terminal 100 among a plurality of pre-registered recruitment information from a plurality of recruitment terminals (not shown) based on the received job search/recruitment function information and provides the identified one or more recruitment information to the terminal 100. Further, the terminal 100 receives one or more recruitment information reflecting the characteristics of the user of the terminal 100 from the server 200 and displays the received one or more recruitment information. Further, the terminal 100 (or the user of the terminal 100) may perform a job search activity (or job hunting activity) based on the received one or more job recruitment information.

Further, when the additional test function for specialized technical field is selected from among the plurality of functions displayed on one side of the terminal 100 according to the user's selection, the terminal 100 transmits information about the selected additional test function for specialized technical field and identification information about the terminal 100 to the server 200. Further, the server 200 receives, from the terminal 100, the information about the additional test function for the specialized technical field and the identification information about the terminal 100. Further, the server 200 identifies the per-field specialized additional test corresponding to the received information about the additional test function for the specialized technical field among a plurality of tests pre-registered in the server 200. Further, the server 200 performs a test function for the identified per-field specialized additional test in conjunction with the terminal 100.

As such, the user of the terminal 100 may perform a specialized separate additional test function in relation to the user, in conjunction with the server 200.

Further, when the future planning/job recommendation function is selected from among the plurality of functions displayed on one side of the terminal 100 according to the user's selection, the terminal 100 transmits information about the selected future planning/job recommendation function and identification information about the terminal 100 to the server 200. Further, the server 200 receives, from the terminal 100, the information about the future planning/job recommendation function and the identification information about the terminal 100. Further, the server 200 identifies future planning information and recommended job information appropriate for the user's personality based on the received future planning/job recommendation function information, one or more test function execution results related to the user of the terminal 100, and the interaction score and transmits the identified future planning information and recommended job information to the terminal 100. Further, the terminal 100 receives, from the server 200, the future planning information and recommended job information and displays the received future planning information and recommended job information.

Further, when the individual customized health information recommendation function (or a function of recommending a health solution optimized for an individual) is selected from among the plurality of functions displayed on one side of the terminal 100 according to the user's selection, the terminal 100 transmits information about the selected individual customized health information recommendation function and the identification information about the terminal 100 to the server 200. Further, the server 200 receives, from the terminal 100, the information about the individual customized health information recommendation function and the identification information about the terminal 100. Further, the server 200 identifies information related to health functional foods, cosmetics, customized supplements, drugs, exercise information, lifestyle, etc. according to the user's health condition based on the received information about the individual customized health information recommendation function, one or more test function execution results related to the user of the terminal 100, and interaction scores and transmits, to the terminal 100, the identified information related to health functional foods, cosmetics, customized supplements, drugs, exercise information, and lifestyle according to the user's health condition. Further, the terminal 100 receives, from the server 200, the information related to health functional foods, cosmetics, customized supplements, drugs, exercise information, and lifestyle according to the user's health condition and displays the received information related to health functional foods, cosmetics, customized supplements, drugs, exercise information, and lifestyle according to the user's health condition.

As such, the server 200 may systemically classify per-user characteristics, according to each test item, with respect to the database information (or the test function execution result/questionnaire data) in relation to the user of the terminal 100, test function the customized information (or customized test) appropriate for the user's characteristics to other users through various media (including, e.g., the Internet), and establish a user-customized social media service that is searchable and rankable.

Further, the server 200 may establish an ontology form of various questionnaire items included in test information, standardize and store various data, provide a specialized search engine (including, e.g., semantic web) (not shown) based on accumulated data (or per-user test function execution results), and sell it to various demanding organizations requiring standardized data.

As an example, when the test recommendation function according to user input data is selected from among the plurality of functions included in the additional function screen displayed on the first terminal according to the user's selection, the first terminal receives first user input data (e.g., my heart beats faster for the lady I met today) according to a user input and transmits, to the server 200, the received first user input data, information about the selected test recommendation function according to the user input data, and the identification information about the first terminal.

Further, the server 200 receives, from the first terminal, the first user input data, the information about the test recommendation function according to the user input data, and the identification information about the first terminal.

Further, the server 200 identifies an 17th affection test related to the received first user input data (e.g., my heart beats faster for the lady i met today) among a plurality of tests pre-registered in the server 200. Further, the server 200 performs the test function for the identified 17th affection test in conjunction with the first terminal and provides the affection test function execution result to the first terminal (S360).

According to embodiments of the present invention, as described above, it is possible to establish bigdata related to a specific individual based on questionnaire data for a plurality of tests and provide comparison information obtained by comparing the established bigdata, related to the specific individual, with bigdata of another user related to the specific individual. Thus, it is possible to provide information about the relationship between the individual and his acquaintances and hence arouse interest.

Further, according to embodiments of the present invention, it is possible to build bigdata related to a specific individual based on questionnaire data for a plurality of tests and provide additional functions according to information fusion with four-pillars-of-destiny information, genotype information, and person recommendation information related to the specific individual, based on the built bigdata related to the specific individual. Thus, it is possible to provide various types of additional information related to the individual and hence allow for better satisfaction and easier creation of high-quality content.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the present invention should be construed by the following claims, and all technical spirits within equivalents thereof should be interpreted to belong to the scope of the present invention.

### * Legend of reference numbers *

10: system for processing and providing customized information based on questionnaire data
100: terminal 200: server
110: communication unit 120: storage unit
130: display unit 140: audio output unit
150: controller

## Claims

1. A system for processing and providing customized information based on questionnaire data, the system comprising:
a terminal, when information about any one test is selected from among information about one or more tests included in a test screen displayed on the terminal according to a user's selection, performing a test function for a test corresponding to the information about the selected any one test in conjunction with a server and displaying a test function execution result provided from the server; and
the server matching the test function execution result with user information related to the user, creating a database for the matched test function execution result and user information, performing machine learning on a database of one or more test function execution results corresponding to one or more tests performed on the terminal, calculating interaction scores per test item according to one or more test function execution results corresponding to one or more tests performed on the terminal based on an evaluation score preset for each test item according to a test type and a result of the machine learning, calculating an average interaction score by dividing a sum of the calculated interaction scores by the number of the tests performed on the terminal, and transmitting the calculated interaction scores and average interaction score to the terminal.

2. The system of claim 1, wherein the server identifies a test item having a high interaction score among the calculated per-test item interaction scores, compares an interaction score corresponding to the identified test item having the high interaction score, among interaction scores for a plurality of test items corresponding to a plurality of other users related to the user of the terminal, with the interaction score having the high interaction score related to the terminal, generates comparison information corresponding to a result of comparison between interaction scores corresponding to the plurality of other users and the interaction score related to the terminal in relation to the test item having the high interaction score, and transmits the generated comparison information to the terminal.

3. The system of claim 1, wherein when any one function is selected from among a plurality of functions included in an additional function screen displayed on the terminal according to the user's selection, the terminal applies the test function execution result and performs the selected any one function in conjunction with the server, and wherein the plurality of functions include any one of a four-pillars-of-destiny information comparison function, a genotype information comparison function, an information sharing function, a friend recommendation function, a test recommendation function according to user input data, a test recommendation function based on accumulated questionnaire data or the calculated interaction scores, an accumulated questionnaire data sale function, a function of adding a comment to the accumulated questionnaire data, a job search/recruitment function based on the accumulated questionnaire data or the calculated interaction scores, an additional test function for a specialized technical field, a future planning or job recommendation function, and an individual customized health information recommendation function.

4. The system of claim 3, wherein when the four-pillars-of-destiny information comparison function is selected from among a plurality of functions displayed on a side of the terminal according to the user's selection, the server identifies four-pillars-of-destiny information related to the user of the terminal using information including a year, month, day, and time of birth related to the terminal, pre-registered in the server, based on information about the four-pillars-of-destiny information comparison function transmitted from the terminal, compares a test function execution result related to a social test, an emotional test, and a practical test among test function execution results accumulated in relation to the terminal, with the identified four-pillars-of-destiny information, generates a result of comparison between a test result for each individual and innate four-pillars-of-destiny information, and transmits the generated result of the comparison between the test function execution result and the four-pillars-of-destiny information to the terminal, and wherein the terminal displays the result of the comparison between the test function execution result and the four-pillars-of-destiny information transmitted from the server.

5. The system of claim 3, wherein when the genotype information comparison function is selected from among a plurality of functions displayed on a side of the terminal according to the user's selection, the server identifies a DNA analysis result and medical treatment information related to the user of the terminal in conjunction with a hospital server based on information about the genotype information comparison function transmitted from the terminal, combines a test function execution result related to health among accumulated test function execution results in relation to the terminal and the identified DNA analysis result and medical treatment information related to the user of the terminal, generates information about the user's innate personality or propensity, and transmits the generated information about the user's innate personality or propensity to the terminal, and wherein the terminal displays the information about the user's innate personality or propensity transmitted from the server.

6. The system of claim 3, wherein when the information sharing function is selected from among a plurality of functions displayed on a side of the terminal according to the user's selection, the server registers one or more test function execution results to be shared, to a web portal cluster or social media service account related to the user based on information about the information sharing function transmitted from the terminal and information about the one or more test function execution results to be shared

7. The system of claim 3, wherein when the accumulated questionnaire data sale function is selected from among a plurality of functions displayed on a side of the terminal according to the user's selection, the server provides, to a purchaser terminal, at least one test function execution result related to at least one test performed on the terminal, based on information about the accumulated questionnaire data sale function transmitted from the terminal and information about the at least one test performed on the terminal, to be sold, and provides cryptocurrency according to the sold test function execution result to a cryptocurrency account related to the user of the terminal as the at least one test function execution result is provided.

8. A method for processing and providing customized information based on questionnaire data, the method comprising:
when information about any one test is selected from among information about one or more tests included in a test screen displayed on a terminal according to a user's selection, performing, by the terminal, a test function for a test corresponding to the information about the selected any one test in conjunction with a server;
matching, by the server, a test function execution result according to performing the test function with the terminal, with user information related to the user, creating a database for the matched test function execution result and user information, and providing the test function execution result to the terminal;
calculating, by the server, interaction scores per test item according to one or more test function execution results corresponding to one or more tests performed on the terminal based on an evaluation score preset for each test item according to a test type;
calculating, by the server, an average interaction score by dividing a sum of the calculated interaction scores by the number of the tests performed on the terminal; transmitting, by the server, the calculated interaction scores and average interaction score to the terminal; and
displaying, by the terminal, the interaction scores and the average interaction score transmitted from the server.

9. The method of claim 8, further comprising:
identifying, by the server, a test item having a high interaction score among the calculated per-test item interaction scores;
comparing, by the server, an interaction score corresponding to the identified test item having the high interaction score, among interaction scores for a plurality of test items corresponding to a plurality of other users related to the user of the terminal, with the interaction score having the high interaction score related to the terminal;
generating, by the server, comparison information corresponding to a result of comparison between interaction scores corresponding to the plurality of other users and the interaction score related to the terminal in relation to the test item having the high interaction score;
transmitting, by the server, the generated comparison information to the terminal; and
displaying, by the terminal, the comparison information transmitted from the server.

10. The method of claim 8, further comprising, when any one function is selected from among a plurality of functions included in an additional function screen displayed on the terminal according to the user's selection, applying, by the terminal, the test function execution result and performing the selected any one function in conjunction with the server, wherein the plurality of functions include any one of a four-pillars-of-destiny information comparison function, a genotype information comparison function, an information sharing function, a friend recommendation function, a test recommendation function according to user input data, a test recommendation function based on accumulated questionnaire data or the calculated interaction scores, an accumulated questionnaire data sale function, a function of adding a comment to the accumulated questionnaire data, a job search/recruitment function based on the accumulated questionnaire data or the calculated interaction scores, an additional test function for a specialized technical field, a future planning or job recommendation function, and an individual customized health information recommendation function.
